# EUROPEAN PATENT SPECIFICATION

(11) **EP 2 679 480 B1**
(45) Date of publication and mention of the grant of the patent: **05.10.2016**
(21) Application number: 12173685.4
(22) Date of filing: 26.06.2012
(51) Int. Cl.: B62M 1/28

(54) **Vehicle**
Fahrzeug
Véhicule

(43) Date of publication of application: 01.01.2014
(73) Proprietor: Streetstepper GmbH, 73614 Schorndorf (DE)
(72) Inventor: Buchberger, Martin, 6080 Innsbruck-Vill (AT)
(74) Representative: Dilg, Haeusler, Schindelmann Patentanwaltsgesellschaft mbH

(56) References cited:
- EP-A1- 0 201 639
- WO-A1-91/08136
- FR-A- 1 056 802
- NL-C1- 2 000 691
- US-A1- 2005 087 952
- US-B1- 6 419 251
- US-B1- 6 540 648
- US-B1- 7 988 170

## Description

### FIELD OF THE INVENTION

The invention relates to a vehicle, in particular to vehicle propellable by muscle power, e.g. a step scooter.

EP-A-0 201 639 discloses a vehicle having the features of the preamble of claim 1.

### BACKGROUND

Exemplary embodiments of vehicles propelled by muscle power, which are driven by the driver by a first tread surface, which is movable via a tread surface stroke and which also comprise a steering device, are identified as pedal mobile, scooter, see-saw scooter or lever-propelled bicycle, for example. As a rule, such vehicles are equipped with one, but in particular with two such tread surfaces, for example in the form of levers, which are preferably alternately moved by the driver, in particular by using a treading motion. Oftentimes, the tread surface is supported so as to be pivotable about an axis in a certain angle. However, exemplary embodiments are also known in which the tread surface is not supported so as to be pivotable in a certain angle, but where the angle between tread surface and direction of motion of the vehicle changes little or not at all. With such embodiments, the tread surface is mostly moved forwards and backwards or upward and downward or combined forwards and backwards as well as upward and downward, i.e. a translatory movement is performed.

After a tread surface motion has taken place in one direction and after the tread surface was subsequently released again, the first tread surface is mostly moved back into its initial position by using a spring device. However, exemplary embodiments with two tread surfaces are also known, where the return of the tread surfaces into the initial position takes place via a coupling by an alternating load on the two tread surfaces. This coupling of the two tread surfaces can take place, for example, by using mechanical or hydraulic elements, tackle or chain hoists or by fixing the two tread surfaces to a see-saw.

With such scooters, the transmission of the tread surface path into covered vehicle distance takes place via one first driving element for each tread surface, for example. As a rule, this first driving element is designed as a preferably flexible and elongation-proof pulling element and is guided with a non-positive or positive fit via a so-called drive shaft, which is coupled to the driving wheel via a freewheeling mechanism (or a non-return device). This coupling between each of the drive shaft assigned to a tread surface and the driving wheel by using a freewheeling mechanism is in each case required for the vehicle to be capable of continuing to move during the return stroke of the tread surfaces - and thus during the return motion of the respective first driving element - in an unhindered manner. It goes without saying that it is also possible to design this coupling not only via a freewheeling mechanism in each case, but also via additional mechanical parts, such as for example gear wheels, chains, belts or also via a gear shift - for example a gear hub.

For example, US 6,419,251 B1 discloses a propelling scooter including a chassis, a front wheel steerably attached to a front end of the chassis, a rear wheel rotatably attached to a rear end of the chassis and an elongated pedal disposed longitudinally above the chassis. The pedal has a backward end and a forward end. The pedal is pivotally connected to the chassis between the ends thereof and is adapted to sway relative to the chassis. A first shaft laterally extends through and is rotatably supported on the chassis. The scooter further includes a driving pulley securely mounted around the first shaft, a driven pulley securely attached to a center of the rear wheel, and a primary flexible drive piece reeved around the driving pulley and the driven pulley to transmit rotation from the first shaft to the rear wheel such that the scooter may move forward when the first shaft is rotated relative to the chassis in a correct direction. However, the mechanism for propelling the respective propelling scooter is quite complicated and comprises a great amount of parts which has to be manufactured specific for the respective propelling scooter.

### SUMMARY

There may be a need to create a vehicle having a propelling mechanism which is less complex and may allow using standard parts with the vehicle.

This need may be fulfilled by a vehicle with the features according to the independent patent claim. Advantageous embodiments result from the dependent claims.

According to an exemplary aspect a vehicle is provided, wherein the vehicle comprises a frame comprising a first fixing point and a second fixing point, a drive shaft fixed to the frame an actuating element pivotably fixed to the frame at the first fixing point and moveable by a stroke along a movement path. Furthermore, the vehicle comprises a driving element fixed to the frame at the second fixing point and coupled to the drive shaft and a deflection element coupled to the actuating element, wherein the drive shaft is arranged between the first fixing point and the second fixing point; and wherein the deflection element is coupled to the actuating element in such a way that during a stroke the deflection element deflects the driving element.

It should be noted that the term "the drive shaft is arranged between the first fixing point and the second fixing point" does as well include that the three elements (first fixing point, second fixing point and the drive shaft) are arranged on a straight line or that the three elements are arranged on a curved line, angled line or articulated line. In particular, there may be a continuous path along the frame from the first fixing point to the second fixing point via the point at which the drive shaft is attached to the frame. For clarity reasons it should be noted that the line which is used to define a relative position of the first fixing point, the second fixing point and the drive shaft may be the shortest continuous path on the frame connecting all three elements with each other.

In particular, the vehicle may be a vehicle propelled by muscle power. Propelled by muscle power may include a propelling solely by muscle power as well as a muscle propelling assisted or aided by motor force.

In particular, the driving element may be a flexible driving element, i.e. a driving element which can be bend or deflected. Examples for such a flexible driving element may be a chain, flexible band, a rope, a cord, a belt, a strap, a toothed belt or the like. In particular, the actuating element may be a tread, a tread surface, a lever or an arm.

The term "deflection element" may particularly denote any element which is suitable to deflect a direction of a driving element which passes over the deflection element. For example, the deflection element may be a deflection roller or even a rim or ridge having a smooth surface so that the wear induced by a driving element passing over the smooth surface is of an acceptable level, e.g. below a given predetermined threshold ensuring that the deflection element and/or the driving element can be used for a certain time and/or a certain driving distance. In this context, the term "coupled" may particularly denote that the deflection element is fixed to the actuating element that it moves together with the actuating element on a given path, while it may optionally rotate with respect to the actuating element. Alternatively or additionally, some small relative movement of the deflection element, e.g. a slight transversal movement, may still be possible. However, the amount of the relative movement should not be so big that the relative movement degrades the function of the force transmission from the actuating element to the drive shaft via a deflecting of the driving element.

In particular, the actuating element may be clamped by a spring device. Such a spring device may furthermore serve the purpose of returning the actuating element back into its initial position after the stroke has taken place. Optionally, it may thus be possible, with designs of such a vehicle propelled by muscle power with two actuating elements, to design the two actuating elements so as not to be coupled. However, couplings of the actuating elements by additional mechanical or hydraulic elements may be possible although it is not necessary for the function.

By arranging the drive shaft between the first fixing point, e.g. a joint at which the actuating element is fixed, and a second fixing point, e.g. a point at which the driving element is fixed to the frame it may be possible to arrange the drive shaft at a position corresponding to the position of the bottom bracket of a bicycle. Therefore, it may be possible to use standardized parts from the bicycle industry for several further parts or elements of a vehicle according to an exemplary aspect. For example, standardized front derailleurs, chain rings, sprockets or the like of the bicycle industry may be used instead of parts or components specifically developed.

A general gist of an exemplary aspect may be to provide a vehicle actuated by a pivotable actuating element wherein a deflection element is moved together with the actuating element during a stroke of the same. The stroke along a path deflects a course of a driving element and thus imposes a force onto the driving element and the drive shaft onto which one end of the driving element is coupled to. Since the drive shaft is arranged between a first fixing point at which the actuating element is coupled to the frame of the vehicle and a second fixing point at which the one end of the driving element is fixed to the frame the position of the drive shaft can be brought into a position with respect to the frame at which a bottom bracket of a bicycle is arranged. Therefore, it may be possible that standardized parts or components of the bicycle industry can be used. For example, it may be possible that a standardized gearing system of a bicycle including a derailleur gear can be used so that the flexibility, e.g. with respect to the driving speed and climbing ability, and the functionality of the vehicle may be improved.

Next, further exemplary embodiments of the invention will be described. In the following, further exemplary embodiments of the drive mechanism will be explained. However, these embodiments also apply for the vehicle.

According to another exemplary embodiment the vehicle further comprises a driving body, wherein the driving body is attached to the drive shaft and is adapted to couple the driving element to the drive shaft.

In particular, the driving element may be fixed to the driving body. For example, the driving element may be coupled or attached at its one end to the second fixing point while its other end is coupled to the drive shaft, e.g. by attaching the driving element to the driving body which is in turn attached to the drive shaft.

According to another exemplary embodiment of the vehicle the driving body is attached to the drive shaft via a free wheel mechanism.

The provision of a freewheel mechanism may enable that the driving body may be moved or actuated in an oscillating manner, i.e. back and forth, while the drive shaft, which in turn may be coupled to a sprocket wheel of a derailleur gear, turns in only one direction. Thus, it may be possible to use a standardized or common derailleur gear as it is used for common bicycles.

According to another exemplary embodiment of the vehicle the driving body comprises a pivotable disk element to which the driving element is attached. In particular, the pivotable disk element may be adapted in such a way that it is turnable by less or more than one complete turn of 360°.

In particular, the disk element may be a circular disk or a disk having a non-constant diameter, e.g. a cam disk. For example, the diameter may increase in a monotonous or linear way along the perimeter of the disk element or may increase and/or decrease in an irregular way along the perimeter of the disk element. In particular, perimeter of the disk element may define a regular (e.g. circular or helical) or irregular form. By using a disk element having non-constant diameter along the perimeter it may be possible to compensate for differences in the force applied to the drive shaft by the driving element forming a lever mechanism having a variable lever arm of the force or moment arm.

According to another exemplary embodiment of the vehicle the coupling of the driving element to the pivotable disk element is in such a way that a pulling force applied to the driving element turns the pivotable disk element into a first direction.

According to another exemplary embodiment the vehicle further comprises a returning mechanism adapted to turn the pivotable disk element into a second direction opposite to the first direction.

In particular, the returning mechanism may comprise a spring element, an elastic element and/or a pull or tension element. For example, the returning element may be formed by a cord or chain connected to the pivotable disk element and adapted to pivot or rotate the pivotable disk element in the opposite direction than the drive element.

According to another exemplary embodiment the vehicle further comprises a further returning element adapted to return the actuating element to an initial position after the completion of a stroke.

In particular, the further returning element may comprise an elastic element, e.g. a spring element, and/or pull or tension element, e.g. a chain, cord or belt, fixed to the frame and to the actuating element.

According to another exemplary embodiment the vehicle further comprises a stop element, wherein the stop element is adapted to limit a movement range of the actuating element.

In particular, the stop element may be arranged to limit the movement of the actuating element on an upper part of the movement or at the lower part of the movement. For example, the stop element may be a separate element fixed to the frame or may be formed by a portion, e.g. the last part, of the driving element or may be attached to the driving element. In case the stop element is formed by or attached to a portion of the driving element the stop element may be formed by a bent metal sheet, e.g. by a bent metal sheet, adapted to catch the moving actuating element. Furthermore, it should be mentioned that the vehicle may of course comprise two stop elements fixed or attached to the frame and adapted to limit the movement range of the actuating element with respect to both end positions of the movement range.

According to another exemplary embodiment the vehicle further comprises a wheel onto which a back sprocket is attached, a front sprocket and a transmission element connecting the front sprocket and the back sprocket, wherein the front sprocket is attached to the drive shaft in such a way that a rotation of the drive shaft rotates the front sprocket and via the transmission element the back sprocket attached to the wheel.

In particular, the vehicle may comprise two wheels, e.g. a front and a back wheel, which may be standardized or common bicycle wheels as they are used in racing bicycles or mountain bikes. The front sprocket, the back sprocket and the chain as well may be standardized or common bicycle parts or components. Thus, at least some common bicycle parts or components may be used for the vehicle according to an exemplary aspect. In particular, the transmission element may be a chain, toothed belt or the like.

According to another exemplary embodiment the frame further comprises a third fixing point and a fourth fixing point and the vehicle further comprises a further actuating element pivotably fixed to the frame at the third fixing point and moveable by a stroke along a movement path, a further driving element fixed to the frame at the fourth fixing point and coupled to the drive shaft, and a further deflection element coupled to the further actuating element, wherein the drive shaft is arranged between the third fixing point and the fourth fixing point, and wherein the further deflection element is coupled to the further actuating element in such a way that during a stroke the further deflection element deflects the further driving element.

The two actuating elements may be arranged on different sides of the vehicle, e.g. the actuating element may be arranged on the left side of the vehicle and may be arranged to be actuated by a left leg of a user while the further actuating element may be arranged on the right side of the vehicle and may be adapted to be actuated by a right leg of a user of the vehicle. For example, the two actuating elements each having a deflection element attached thereto and the respective deflection elements may be moved or actuated independently from each other. In particular, the two actuating elements may not be coupled to each other in such a way that the movement of one actuating element induces a movement of the other actuating element, while both actuating elements may be coupled to the drive shaft or at least supply a force or moment to the drive shaft.

In particular, the actuating element, the driving element, the deflection element and optionally a first driving body may be part of or may form a first propelling sub-mechanism, while the further actuating element, the further driving element, the further deflection element and optionally a second driving body may be part of or may form a second propelling sub-mechanism. The two propelling sub-mechanism may be independent from each other, i.e. the movement or actuating of one propelling sub-mechanism may not affect or influence the movement or actuating of the other propelling sub-mechanism. In particular, the first driving body and the second driving body, or at least components or parts thereof, may be moveable independently from each other. In particular, the one propelling sub-mechanism may be arranged on one side of the vehicle propellable by muscle power with respect to the movement direction of the vehicle, while the other propelling sub-mechanism is arranged on the other side of the vehicle. No further elements may be necessary on the one side of the vehicle to enable a cyclic motion or movement of the first propelling sub-mechanism. For example, no cord, chain, cable or the like leading from the left or right side to the right or left side of the vehicle may be necessary.

According to a specific exemplary embodiment a vehicle may be provided which comprise a propelling mechanism having two sub propelling mechanisms which may be coupled to each other but are preferably independent of each other. In that case one sub propelling mechanism may be arranged on the left side with respect to the movement direction of the vehicle while the other one may be arranged on the right side with respect to the movement direction of the vehicle. Thus, one sub propelling mechanism may be actuated by the left leg of a user while the other one may be actuated by the right leg of the user. Both sub propelling mechanism may have identical elements but may be arranged mirrored to each other with respect to a longitudinal axis of the vehicle. Therefore, each sub propelling mechanism may comprise an actuating element which is moveable by a stroke along a movement path, and a deflection element. However, the two sub-propelling mechanism may share a single drive shaft. Optionally, both sub propelling mechanisms may be coupled to the same drive shaft by different driving bodies, e.g. drive or cam disks, wherein the coupling may be performed by a freewheel mechanism. The above described elements may form a primary actuating mechanism for the vehicle while a secondary actuating mechanism of the vehicle may be formed by a transmission element connecting or coupling the primary actuating mechanism with a wheel, e.g. a back wheel, of the vehicle. This secondary actuating mechanism may be formed by a single transmission element and may optionally comprise a gearshift in order to enable different transmission ratios. However, it should be noted that the vehicle may comprise a propelling mechanism only on one side of the vehicle so that it is propellable by a single leg, e.g. the left leg or the right leg of a user.

The exemplary embodiments and aspects defined above and further aspects of the invention are apparent from the examples of embodiment to be described hereinafter and are explained with reference to these examples of embodiment. It should be noted that features described in connection with one exemplary aspect or embodiment may also be combined with the features of another exemplary aspect or embodiment.

### BRIEF DESCRIPTION OF THE DRAWINGS

The invention will be described in more detail hereinafter with reference to examples of embodiment but to which the invention is not limited.
Fig. 1 schematically illustrates an overall view of a vehicle according to an exemplary embodiment.
Fig. 2 schematically illustrates a detailed view of a propelling mechanism according to an exemplary embodiment.

### DESCRIPTION OF EMBODIMENTS

The illustration in the drawing is schematically. In different drawings, similar or identical elements are provided with the same reference signs.

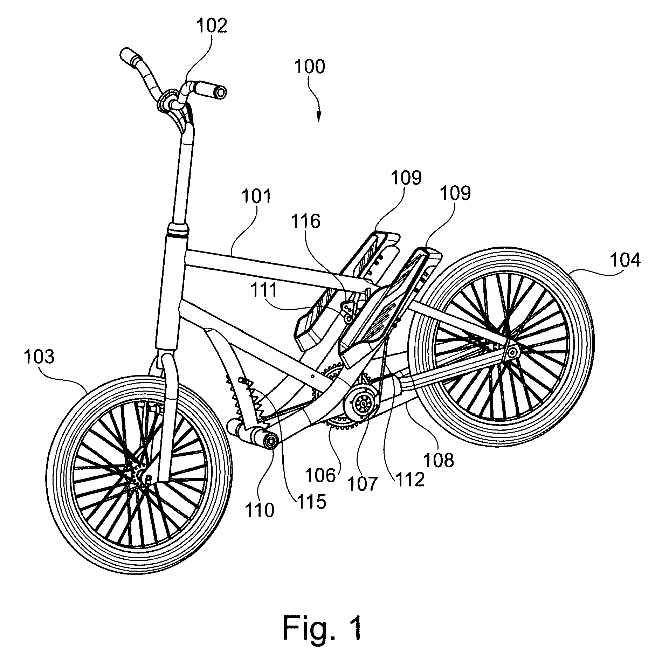

In the following, referring to Figs. 1 to 2 some basic principles of a vehicle and its propelling mechanism according to exemplary embodiments will be explained.

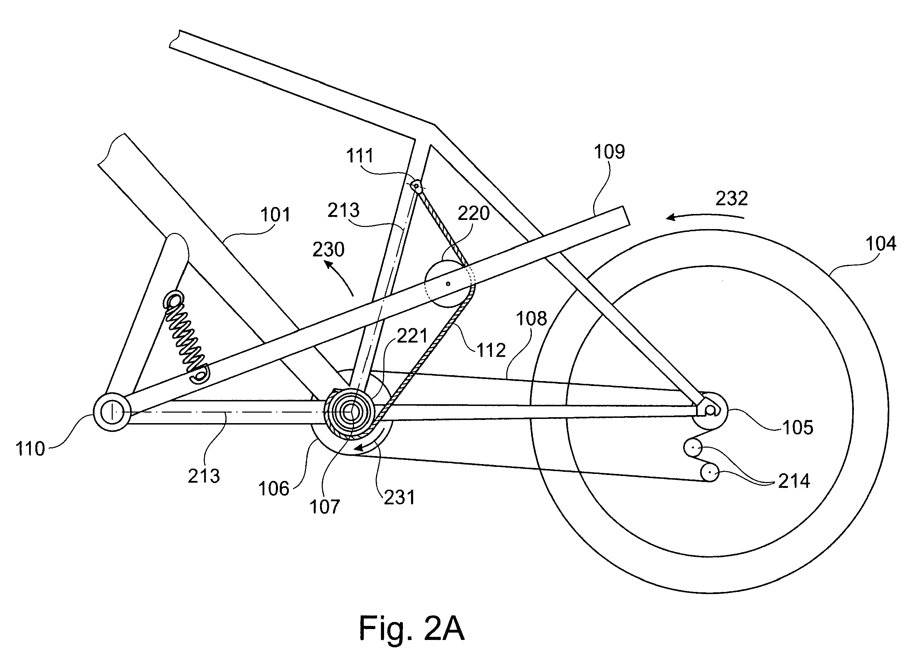

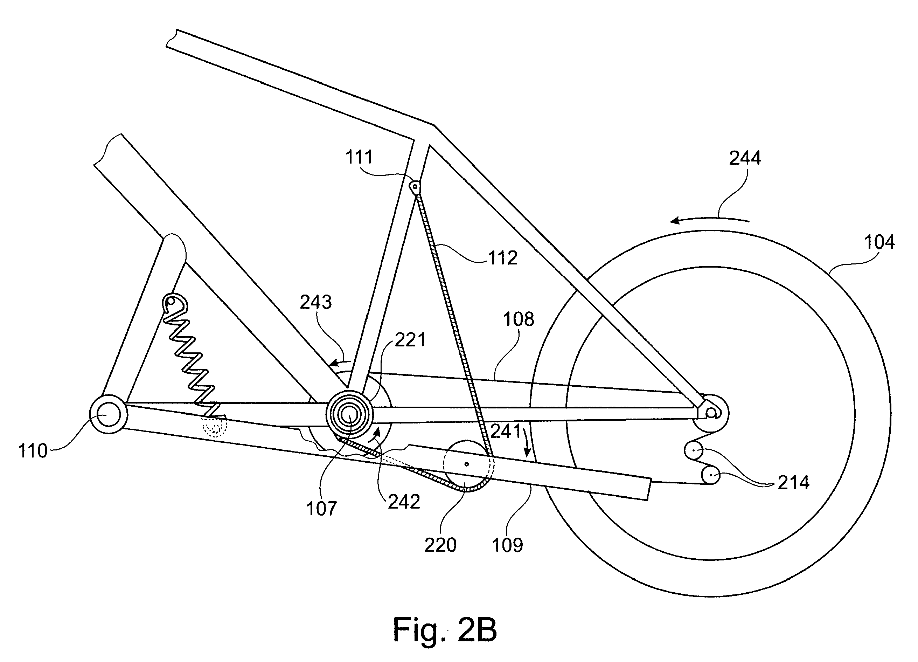

Fig. 1 schematically illustrates an overall view of a vehicle 100, in particular a scooter or streetstepper^{®}. The vehicle 100 comprises a frame 101 and a handle bar102. Furthermore, the vehicle comprises a front wheel 103 and a back wheel 104 which may be driven or powered by the help of a chain 108. Optionally, a known derailleur gear, comprising a back sprocket fixed to the back wheel, e.g. by a first free wheel mechanism, and a front sprocket 106 coupled to a drive shaft 107 which is fitted into a bottom bracket housing of the vehicle may be provided. A schematic derailleur gear can be seen in Fig. 2. In general the bottom bracket housing and thus the drive shaft 107 is arranged at the same relative position with respect to the back wheel 104 than in an ordinary bicycle. The front sprocket 106 and the back sprocket are coupled via the chain 108. In general, the whole or most of the derailleur gear may be formed by standardized bicycle components or parts. Additionally, two actuating elements 109, e.g. levers, are pivotably fixed to the frame at a first fixing point 110 and a third fixing point, respectively. Furthermore, the frame includes a second fixing point 111 and a forth fixing point to which one end of a driving element 112, e.g. a further chain or belt, is fixed or coupled, while the other end of the driving element 112 is coupled directly or indirectly to the drive shaft 107. The second fixing point 111 can be more clearly seen in Fig. 2. Additionally, the vehicle may comprise a stop element 116 which may be fixed to the frame 101 or may be formed by a portion of the driving element 112. In general, the actuating elements, e.g. lever, the drive shaft, the driving elements 112, the front and back sprockets, and the chain 108 are parts of a propelling mechanism of the vehicle. Additionally, a returning element 115, e.g. a spring, may be coupled in such a way between frame and the actuating element(s) that the actuating element(s) is(are) returned to an upper dead centre or stop when it is not pushed down by a user of the vehicle.

Moreover, the vehicle may comprise further common parts, like a handle bar, brackets, an optionally front derailleur, in order to increase the number of gears of the vehicle, a back derailleur, and a fork optionally including a shock absorber. In particular, common components of a bicycle may be used for these parts.

Fig. 2 schematically shows details of the propelling mechanism of the vehicle of Fig. 1 in two positions of an actuating cycle. For the sake of clarity Fig. 2 only shows a simplified illustration of the parts. In particular, Fig. 2 shows the actuating element 109 and the first fixing point 110 at which the actuating element is pivotably fixed to the frame 101. Additionally, a deflection element 220 is fixed to the actuating element 109. The deflection element may be a deflection roller or a smoothed rim or edge, for example. Moreover, Fig. 2 depicts a drive shaft 107 onto which a drive body 221, e.g. a cam disk or circle disk, is coupled, e.g. via a free wheel mechanism. Additionally, the front sprocket 106 is coupled to the drive shaft 107, wherein the chain 108 is coupling the front sprocket with the back sprocket coupled to the back wheel 104 via the back derailleur 214 and optionally via a front derailleur (not shown). It should be mentioned that the propelling mechanism shown in Fig. 2 only shows a single actuating element and corresponding driving element and driving body, for the sake of clarity. Another, actuating element and the corresponding driving element and driving body may be arranged at the other side of the frame of the vehicle, and forming a second sub-propelling mechanism.

It should be noted that the drive shaft 107 is arranged between the first fixing point 110 and the second fixing point 111 along the path which is the shortest path 213 along the frame from the first fixing point to the second fixing point and which is indicated by the bent dashed line 213 in Fig. 2A. In particular, the drive shaft may be arranged at or form a bend of the path. In case the tube of the frame onto which the second fixing point is fixed, corresponding to the seat tube of a common bicycle, is angled in the way of a common bicycle, i.e. leaning backwards, the drive shaft is arranged between the first fixing point and the second fixing point as well in a top projection or top view.

In particular, Fig. 2A shows the propelling mechanism in a first position or movement indicated by the arrows close to an upper dead center or stop of the actuating element. Arrow 230 indicates that the actuating element is moving upwards. Thus, the deflection element 220 is moving upwards as well leading to a shortening of the length of the driving element 112 between the drive body 221 onto which it is fixed on the one side and the second fixing point 111 onto the other side of the drive element is fixed. The drive body 221 is biased by a returning mechanism (not shown), e.g. by a spring or a cord functioning as the returning mechanism, in such a way that in this case the drive body 221 turns in the direction indicated by arrow 231 winding up the drive element at the same time. However, the back wheel 104 will turn further in the direction as indicated by arrow 232. In case the back sprocket 205 is coupled to the back wheel by a free wheel mechanism the chain 108 does not move. However, a free wheel mechanism between the back sprocket and the back wheel is not necessary, in case a free wheel mechanism is provided at another coupling, e.g. between the drive shaft and the drive body.

Fig. 2B shows the propelling mechanism in a second position corresponding to a down stroke of the actuating element. As indicated by arrow 241 the actuating element is pushed down leading to a movement of the deflection element 220 coupled thereto as well. Thus, the length of the driving element between the second fixing point and the drive body is increased. Consequently, the drive body is turned in the direction as indicated by arrow 242. Together with the drive body the drive shaft and the front sprocket coupled thereto is turned in the direction indicated by arrow 243. Therefore, the chain 108 and the back sprocket 205 are turned as well, leading to a rotation of the back wheel as indicated by arrow 244.

Summarizing it should be noted that a vehicle propelled by muscle power may be provided according to an embodiment having a propelling mechanism comprising an actuating element pivotably fixed to a frame and comprising a deflection element. Furthermore, the frame comprises a fixing point onto which a first end of an driving element is fixed while another end of the driving element is coupled (directly or indirectly) to a drive shaft which is arranged between the fixing point and the joining point of the actuating element and the frame. When pushing down the actuating element the path length for the driving element is increased due to the deflection element bending or deflecting the driving element. Thus, the drive shaft coupled to one end of the driving element is turned providing an actuating mechanism for a derailleur gear of the vehicle. Since the drive shaft can be arranged in principle at the same position as for a common bicycle common bicycle components may be used for the derailleur gear potentially increasing the flexibility and reducing the costs of the vehicle.

In addition, it is pointed out that "comprises" or "comprising" does not exclude any other elements or steps and that "one" does not exclude a plurality. It is furthermore pointed out that the features or steps, which have been described with a reference to one of the above exemplary embodiments, aspects or design alternatives, can also be used in combination with other features or steps of other above-described exemplary embodiments, aspects or design alternatives. Reference signs in the claims are not to be considered as limitations.

## Claims

1. A vehicle (100) comprising:
a frame (101) comprising a first fixing point (110) and a second fixing point (111);
a drive shaft (107) fixed to the frame (101) ;
an actuating element (109) pivotably fixed to the frame (101) at the first fixing point (110) and moveable by a stroke along a movement path;
a driving element (112) fixed to the frame (101) at the second fixing point (111) and coupled to the drive shaft (107); and
a deflection element (220) coupled to the actuating element (109),
wherein the drive shaft (107) is arranged between the first fixing point (110) and the second fixing point (111); and
wherein the deflection element (220) is coupled to the actuating element (109) in such a way that during a stroke the deflection element (220) deflects the driving element (112), **characterized in that** the frame (101) comprises a bottom bracket housing and the drive shaft is fitted into the bottom bracket housing.

2. The vehicle (100) according to claim 1, further comprising a driving body (221), wherein the driving body (221) is attached to the drive shaft (107) and is adapted to couple the driving element (112) to the drive shaft (107).

3. The vehicle (100) according to claim 2,
wherein the driving body (221) is attached to the drive shaft (107) via a free wheel mechanism.

4. The vehicle (100) according to claim 2 or 3,
wherein the driving body (221) comprises a pivotable disk element to which the driving element (112) is attached.

5. The vehicle (100) according to claim 4,
wherein the coupling of the driving element (112) to the pivotable disk element (221) is in such a way that a pulling force applied to the driving element (112) turns the pivotable disk element (221) into a first direction.

6. The vehicle (100) according to claim 5, further comprising a returning mechanism adapted to turn the pivotable disk element (221) into a second direction opposite to the first direction.

7. The vehicle (100) according to any one of the claims 1 to 6, further comprising a further returning element adapted to return the actuating element (109) to an initial position after the completion of a stroke.

8. The vehicle (100) according to any one of the claims 1 to 7, further comprising a stop element, wherein the stop element is adapted to limit a movement range of the actuating element (109).

9. The vehicle according to any one of the claims 1 to 8, further comprising:
a wheel (104) onto which a back sprocket (205) is attached;
a front sprocket (106); and
a transmission element (108) connecting the front sprocket (106) and the back sprocket (205),
wherein the front sprocket (106) is attached to the drive shaft (107) in such a way that a rotation of the drive shaft (107) rotates the front sprocket (106) and via the transmission element (108) the back sprocket (205) attached to the wheel (104).

10. The vehicle (100) according to any one of the claims 1 to 9, wherein the frame (101) further comprises a third fixing point and a fourth fixing point and wherein the vehicle (100) further comprises:
a further actuating element pivotably fixed to the frame (101) at the third fixing point and moveable by a stroke along a movement path;
a further driving element fixed to the frame at the fourth fixing point and coupled to the drive shaft; and
a further deflection element coupled to the further actuating element,
wherein the drive shaft(107) is arranged between the third fixing point and the fourth fixing point; and
wherein the further deflection element is coupled to the further actuating element in such a way that during a stroke the further deflection element deflects the further driving element.

## Patentansprüche

1. Ein Fahrzeug (100) aufweisend:
einen Rahmen (101), welcher einen ersten Befestigungspunkt (110) und einen zweiten Befestigungspunkt (111) aufweist;
eine Antriebswelle (107), welche an dem Rahmen (101) befestigt ist;
ein Betätigungselement (109), welches drehbar an dem Rahmen (101) an dem ersten Befestigungspunkt (110) befestigt und bewegbar mittels eines Hubes entlang eines Bewegungspfades ist;
ein Antriebselement (112), welches an dem Rahmen (101) an dem zweiten Befestigungspunkt (111) befestigt ist und mit der Antriebswelle (107) gekoppelt ist; und
ein Auslenkungselement (220), welches mit dem Betätigungselement (109) gekoppelt ist, wobei die Antriebswelle (107) zwischen dem ersten Befestigungspunkt (110) und dem zweiten befestigungspunkt (111) angeordnet ist; und
wobei das Auslenkungselement (220) mit dem Betätigungselement (109) derart gekoppelt ist, dass während eines Hubes das Auslenkungselement (220) das Antriebselement (112) auslenkt, **dadurch gekennzeichnet, dass** der Rahmen (101) ein Tretlagergehäuse aufweist und die Antriebswelle in das Tretlagergehäuse eingepasst ist.

2. Das Fahrzeug (100) gemäß Anspruch 1, ferner aufweisend einen Antriebskörper (221), wobei der Antriebskörper (221) an der Antriebswelle (107) befestigt ist und eingerichtet ist, um das Antriebselement (112) mit der Antriebswelle (107) zu koppeln.

3. Das Fahrzeug (100) gemäß Anspruch 2,
wobei der Antriebskörper (221) an der Antriebswelle (107) via einen Freilaufmechanismus befestigt ist.

4. Das Fahrzeug (100) gemäß Anspruch 2 oder 3,
wobei der Antriebskörper (221) ein drehbares Scheibenelement aufweist, an welchem das Antriebselement (112) befestigt ist.

5. Das Fahrzeug (100) gemäß Anspruch 4,
wobei das Koppeln des Antriebselementes (112) an das drehbare Scheibenelement (221) derart ist, dass eine Zugkraft, welche auf das Antriebselement (112) angewendet ist, das drehbare Scheibenelement (221) in eine erste Richtung dreht.

6. Das Fahrzeug (100) gemäß Anspruch 5, ferner aufweisend einen Rückkehrmechanismus, welcher eingerichtet ist, um das drehbare Scheibenelement (221) in eine zweite Richtung entgegengesetzt der ersten Richtung zu drehen.

7. Das Fahrzeug (100) gemäß einem der Ansprüche 1 bis 6, ferner aufweisend ein weiteres Rückkehrelement, welches eingerichtet ist, um das Betätigungselement (109) in eine initiale Position zurückzudrehen nach dem Vervollständigen eines Hubes.

8. Das Fahrzeug (100) gemäß einem der Ansprüche 1 bis 7, ferner aufweisend ein Stopelement, wobei das Stopelement eingerichtet ist, um einen Bewegungsbereich des Betätigungselementes (109) einzugrenzen.

9. Das Fahrzeug gemäß einem der Ansprüche-1 bis 8, ferner aufweisend:
ein Rad (104) auf welchem ein hinteres Zahnrad (205) befestigt ist;
ein vorderes Zahnrad (106); und
ein Übertragungselement (108), welches das vordere Zahnrad (106) und das hintere Zahnrad (205) verbindet,
wobei das vordere Zahnrad (106) an der Antriebswelle (107) derart befestigt ist, dass eine Rotation der Antriebswelle (107) rotiert das vordere Zahnrad (106) und via dem Übertragungselement (108) das hintere Zahnrad (205), welches an dem Rad (104) befestigt ist.

10. Das Fahrzeug (100) gemäß einem der Ansprüche 1 bis 9, wobei der Rahmen (101) ferner aufweist einen dritten Befestigungspunkt und einen vierten Befestigungspunkt und wobei das Fahrzeug (100) ferner aufweist:
ein weiteres Betätigungselement, welches drehbar an dem Rahmen (101) an dem dritten Befestigungspunkt befestigt und bewegbar mittels eines Hubes entlang eines Bewegungspfades ist;
ein weiteres Antriebselement, welches an dem Rahmen an dem vierten Befestigungspunkt befestigt ist und mit der Antriebswelle gekoppelt ist; und
ein weiteres Auslenkungselement, welches mit dem weiteren Betätigungselement gekoppelt ist,
wobei die Antriebswelle (107) zwischen dem dritten Befestigungspunkt und dem vierten Befestigungspunkt angeordnet ist; und
wobei das weitere Auslenkungselement mit dem weiteren Betätigungselement derart gekoppelt ist, dass während eines Hubes das weitere Auslenkungselement das weitere Antriebselement auslenkt.

## Revendications

1. Véhicule (100) comprenant :
un cadre (101) comprenant un premier point de fixation (110) et un deuxième point de fixation (111) ;
un arbre d'entraînement (107) fixé au cadre (101) ;
un élément d'actionnement (109) fixé de manière pivotante au cadre (101) au premier point de fixation (110) et mobile selon une course le long d'une trajectoire de mouvement ;
un élément d'entraînement (112) fixé au cadre (101) au deuxième point de fixation (111) et couplé à l'arbre d'entraînement (107) ; et
un élément de déviation (220) couplé à l'élément d'actionnement (109),
dans lequel l'arbre d'entraînement (107) est agencé entre le premier point de fixation (110) et le deuxième point de fixation (111) ; et
dans lequel l'élément de déviation (220) est couplé à l'élément d'actionnement (109) de telle sorte que pendant une course l'élément de déviation (220) fait dévier l'élément d'entraînement (112), **caractérisé en ce que** le cadre (101) comprend un boîtier de pédalier et l'arbre d'entraînement est inséré dans le boîtier de pédalier.

2. Véhicule (100) selon la revendication 1, comprenant en outre un corps d'entraînement (221), dans lequel le corps d'entraînement (221) est attaché à l'arbre d'entraînement (107) et est adapté pour coupler l'élément d'entraînement (112) à l'arbre d'entraînement (107).

3. Véhicule (100) selon la revendication 2,
dans lequel le corps d'entraînement (221) est attaché à l'arbre d'entraînement (107) via un mécanisme de roue libre.

4. Véhicule (100) selon la revendication 2 ou 3,
dans lequel le corps d'entraînement (221) comprend un élément de disque pivotant auquel l'élément d'entraînement (112) est attaché.

5. Véhicule (100) selon la revendication 4,
dans lequel le couplage de l'élément d'entraînement (112) à l'élément de disque pivotant (221) est tel qu'une force de traction appliquée à l'élément d'entraînement (112) fait tourner l'élément de disque pivotant (221) dans une première direction.

6. Véhicule (100) selon la revendication 5, comprenant en outre un mécanisme de retour adapté pour faire tourner l'élément de disque pivotant (221) dans une deuxième direction opposée à la première direction.

7. Véhicule (100) selon l'une quelconque des revendications 1 à 6, comprenant en outre un autre élément de retour adapté pour faire revenir l'élément d'actionnement (109) à une position initiale après la fin d'une course.

8. Véhicule (100) selon l'une quelconque des revendications 1 à 7, comprenant en outre un élément d'arrêt, dans lequel l'élément d'arrêt est adapté pour limiter une plage de mouvement de l'élément d'actionnement (109).

9. Véhicule selon l'une quelconque des revendications 1 à 8, comprenant en outre :
une roue (104) sur laquelle un pignon arrière (205) est attaché ;
un pignon avant (106) ; et
un élément de transmission (108) reliant le pignon avant (106) et le pignon arrière (205),
dans lequel le pignon avant (106) est attaché à l'arbre d'entraînement (107) de telle sorte qu'une rotation de l'arbre d'entraînement (107) fait tourner le pignon avant (106) et via l'élément de transmission (108) le pignon arrière (205) attaché à la roue (104).

10. Véhicule (100) selon l'une quelconque des revendications 1 à 9, dans lequel le cadre (101) comprend en outre un troisième point de fixation et un quatrième point de fixation et dans lequel le véhicule (100) comprend en outre :
un autre élément d'actionnement fixé de manière pivotante au cadre (101) au troisième point de fixation et mobile selon une course le long d'une trajectoire de mouvement ;
un autre élément d'entraînement fixé au cadre au quatrième point de fixation et couplé à l'arbre d'entraînement ; et
un autre élément de déviation couplé à l'autre élément d'actionnement,
dans lequel l'arbre d'entraînement (107) est agencé entre le troisième point de fixation et le quatrième point de fixation ; et
dans lequel l'autre élément de déviation est couplé à l'autre élément d'actionnement de telle sorte que pendant une course, l'autre élément de déviation fait dévier l'autre élément d'entraînement.
